# EUROPÄISCHE PATENTSCHRIFT

(11) **EP 2 740 778 B1**
(45) Veröffentlichungstag und Bekanntmachung des Hinweises auf die Patenterteilung: **20.12.2017**
(21) Anmeldenummer: 13194343.3
(22) Anmeldetag: 26.11.2013
(51) Int. Cl.: C09J 7/02, C09J 7/04, C09J 9/00, B29C 65/48, B32B 37/06, B32B 37/12, C09J 5/06, C08K 5/00, C08K 3/00, C08K 3/08, C08K 3/04

(54) **Applikationsmaterial und Verfahren zum Aufbringen eines Applikationsmaterials auf einen Träger**
Application material and method for applying an application material on a support
Matériau d'application et procédé d'application d'un matériau d'application sur un support

(30) Priorität: 04.12.2012 DE 102012222177
(43) Veröffentlichungstag der Anmeldung: 11.06.2014
(73) Patentinhaber: Carl Meiser GmbH & Co. KG, 72461 Albstadt (DE)
(72) Erfinder:
(74) Vertreter: Kohler Schmid Möbus Patentanwälte

(56) Entgegenhaltungen:
- EP-A2- 0 440 410
- EP-A2- 1 884 533
- WO-A1-94/08781
- WO-A1-2009/077638
- WO-A1-2011/051095
- WO-A2-2007/010409

## Beschreibung

Die Erfindung betrifft ein Applikationsmaterial zur Applikation auf einen Träger, z. B. ein Kraftfahrzeugteil, mit einer Beschichtung, gemäß dem Oberbegriff von Anspruch 1.

Weiterhin betrifft die Erfindung ein Verfahren zum Aufbringen eines Applikationsmaterials auf einen Träger.

Aus der DE 10 2011 005 901 A1 ist ein Verfahren zum Kaschieren einer flexiblen Materiallage auf einem formstabilen Träger bekannt. Dabei wird die flexible Materiallage auf dem formstabilen Träger aufgelegt, wobei auf die zum formstabilen Träger weisende Seite der Materiallage und/oder auf der zur Materiallage weisenden Seite des formstabilen Trägers ein thermisch aktivierbarer Klebstoff aufgebracht ist. Nach dem Zusammendrücken der flexiblen Materiallage und des formstabilen Trägers werden der Träger und die Materiallage mit einer elektromagnetischen Strahlung, insbesondere einer Mikrowellenstrahlung, einer Hochfrequenzstrahlung oder einer Induktionsstrahlung bestrahlt, wodurch der Klebstoff direkt oder indirekt aktiviert wird.

Die DE 699 02 632 T2 offenbart ein Verfahren zur Bindung eines ersten Substrats an ein zweites Substrat, wobei eines der Substrate einen mikrowellenaktivierbaren Klebstoff auf einer Oberfläche enthält, die dem anderen der Substrate gegenüberliegt. Das erste und zweite Substrat sowie der Klebstoff werden in einer Laminierstation zur Bildung eines Laminats kombiniert. Der Klebstoff wird durch Mikrowellen aktiviert.

Aus der DE 10 2009 046 263 A1 ist ein Verfahren zum Verkleben eines hitzeaktiviert verklebbaren Flächenelements mit einem Verklebungssubstrat bekannt, das den elektrischen Strom nicht leitet und dessen Oberfläche zudem eine nur geringe Wärmeleitfähigkeit besitzt. Hierfür wird ein dünnes hitzeaktiviert verklebbares Flächenelement verwendet, das zusätzlich zu einer hitzeaktiviert verklebenden Klebemasse eine elektrisch leitende Schicht enthält, die in einem Magnet-Wechselfeld mit einer Frequenz aus dem Mittelfrequenzbereich schnell induktiv für kurze Zeit erwärmt wird.

Aus der DE 100 43 299 A1 ist ein Verfahren zum Verkleben eines Bodenbelags bekannt, bei dem entweder ein durch Energieeinwirkung aktivierbarer Klebstoff auf eine Rückseite des Bodenbelags und/oder auf einen mit dem Bodenbelag zu belegenden Boden aufgebracht wird oder die Rückseite des Bodenbelags bereits während des Herstellungsprozesses mit Klebstoff auf der Rückseite versehen wurde, der Klebstoff durch Energieeinwirkung aktiviert wird und der Bodenbelag an den Boden angedrückt und damit verklebt wird.

Aus der WO 2009/077638 A1 ist es bekannt, auf einem Etikett eine Beschichtung vorzusehen, die einen Klebstoff aufweist, der bei einer bestimmten Temperatur aktiviert werden kann.

Die WO 94/08781 A1 offenbart einen Schichtenstapel, bestehend aus einer Schicht, deren Klebstoff durch Mikrowellen oder Induktionserwärmung aktiviert werden kann, wobei diese Schicht durch eine weitere Klebstoffschicht bedeckt ist, die drucksensitiv ist.

Es sind Anwendungen bekannt, bei denen ein Träger mit einem Applikationsmaterial kaschiert wird. Beispielsweise sind Armaturenbretter oder Türinnenverkleidungen von Kraftfahrzeugen häufig mit einem derartigen Applikationsmaterial verkleidet. Dabei muss Klebstoff auf das Applikationsmaterial und/oder den Träger aufgebracht werden. Der Klebstoff, insbesondere eine Komponente eines mehrkomponentigen Klebstoffsystems, muss durch Erwärmung aktiviert werden, damit ein Kleben überhaupt stattfindet. Wird jedoch der mit dem Applikationsmaterial versehene Träger im Gebrauch später wieder erwärmt, darf es nicht dazu führen, dass der Klebstoff wiederum weich wird und es zu einem Ablösen oder Verrutschen des Applikationsmaterials vom Träger kommt. Aus diesem Grund wird häufig ein Härter verwendet, der ebenfalls bei einer gewissen Temperatur aktivierbar ist und dafür sorgt, dass der Klebstoff ausgehärtet und eben nicht wieder bei erhöhter Temperatur weich wird.

Grundsätzlich ist es denkbar, den Klebstoff mittels Sprühen auf den Träger aufzubringen und anschließend das Applikationsmaterial darauf zu positionieren. Ein derartiger Klebstoffauftrag ist jedoch relativ umständlich. Außerdem kann eine homogene Verteilung des Klebstoffs nicht sichergestellt werden. Daher wird der Klebstoff vorzugsweise schon auf das Applikationsmaterial aufgebracht. Das Applikationsmaterial soll im Transport- und Lagerzustand nicht klebend sein. Daher ist es notwendig, dass der Klebstoff erst bei einer erhöhten Temperatur klebend wirkt. Wird jedoch ein Applikationsmaterial, beispielsweise in einem Lastzug, transportiert, ist nicht auszuschließen, dass sich der Klebstoff auch während des Transports über die Aktivierungstemperatur erwärmt und es somit zu einem Kleben kommt. Unter keinen Umständen darf in diesem Fall auch der Härter aktiviert werden, da dann das Applikationsmaterial, beispielsweise auf einer Rolle, vollständig verkleben würde, wobei der Kleber aushärtet und das Applikationsmaterial nicht mehr abgerollt und nicht mehr verwendet werden könnte. Aus diesem Grund ist es vorteilhaft, einen Härter zu verwenden, der erst bei deutlich höheren Temperaturen aktiviert wird.

Problematisch hierbei ist es jedoch, dass bei herkömmlichen Arten der Erwärmung sowohl das Trägerteil als auch das Applikationsmaterial auf die höhere Temperatur erwärmt werden muss, um den Härter zu aktivieren. Dies kann bei manchen Applikationsmaterialien zu Schäden führen, da diese nicht solch hohen Temperaturen, vor allem nicht für längere Zeit, ausgesetzt werden sollten.

Aufgabe der vorliegenden Erfindung ist es daher, ein Applikationsmaterial bereitzustellen, mit dem die oben genannten Schwierigkeiten überwunden werden können. Außerdem ist es Aufgabe der Erfindung, ein Verfahren bereitzustellen, mit dem ein Träger mit einem Applikationsmaterial beschichtet werden kann, ohne dass es zu einer Beschädigung des Applikationsmaterials kommt.

Gelöst wird diese Aufgabe erfindungsgemäß durch ein Applikationsmaterial mit den Merkmalen des Anspruchs 1. Dadurch ist es möglich, ganz gezielt lediglich die Beschichtung zu erwärmen, ohne dass das Applikationsmaterial erwärmt werden muss. Es kann also unmittelbar ein Wärmeeintrag in der Fuge zwischen Applikationsmaterial und Träger erfolgen. Der Energieeintrag zur Erwärmung kann quasi schlagartig erfolgen, ohne dass es zu einer langwierigen Erwärmung des Trägers und des Applikationsmaterials führt. Somit ist eine besonders materialschonende Erwärmung der Beschichtung möglich. Unter einem mikrowellenaktivierbaren Material wird erfindungsgemäß ein Material verstanden, welches mit einem Dipolmoment behaftete Moleküle aufweist oder elektrisch leitfähig ist.

Derartige Moleküle, die einen Dipol aufweisen oder elektrisch leitfähig sind, können mit einem schnell wechselnden elektrischen Feld angeregt werden. Die Moleküle versuchen stets, sich in Richtung der Feldlinien auszurichten und werden so in Rotationsschwingungen versetzt. Denkbar ist es auch, ein mikrowellenaktivierbares Material zu verwenden, welches freie Ionen aufweist. Auch bei diesem Material tritt eine Erwärmung im elektromagnetischen Feld auf. Eine weitere Möglichkeit der Ankopplung an Mikrowellen besteht, wenn magnetische Absorption erfolgt. Mikrowellen sind dabei hochfrequente elektromagnetische Wellen, welche beispielsweise im gleichen Frequenzband wie Radarwellen arbeiten. Durch eine Mikrowelle kann ein Produkt unmittelbar und an jeder Stelle, insbesondere in tieferen Schichten, durch die Wechselwirkung mit dem elektromagnetischen Feld erhitzt werden. Die auftretenden molekularen Stoßvorgänge führen zu erhöhter Molekülbewegung und damit zu einer Temperaturerhöhung.

Während bei anderen Wärmeübertragungssystemen die Temperaturerhöhung des Produkts durch Wärmeleitung von der Oberfläche nach innen erfolgt, kann durch die Erwärmung mittels Induktionserwärmung oder Mikrowellentechnik eine gleichmäßige und rasche Erwärmung erfolgen, ohne dass es auf die Wärmeleitung von der Oberfläche nach innen ankommt.

Die Beschichtung weist als mikrowellenaktivierbares und/oder induktionskoppelbares Material elektrisch leitende Partikel, Ruß, Kohlenstoff, Graphit, Kohlenstoffnanoröhrchen (Carbon nanotubes), Ferrit und/oder Wasser auf. Auch verschiedene Lösungsmittel sind geeignet als mikrowellenaktivierbares Material.

Die Beschichtung weist einen bei einer Temperatur größer oder gleich 100 °C aktivierbaren Härter zur Härtung eines Klebstoffs oder einer Klebstoffkomponente auf. Somit kann der Härter bereits auf das Applikationsmaterial aufgebracht werden. Es steht nicht zu befürchten, dass der Härter bei der Lagerung und oder dem Transport des Applikationsmaterials versehentlich aktiviert wird.

Die Beschichtung umfasst einen Klebstoff oder eine Klebstoffkomponente, der oder die bei einer Temperatur kleiner 80 °C aktivierbar ist. Somit ist der Klebstoff bzw. eine Klebstoffkomponente bei einer Temperatur aktivierbar, die geringer ist als die Aktivierungstemperatur des Härters. Somit kann sichergestellt werden, dass bei einer Erwärmung zunächst der Klebstoff aktiviert wird und anschließend erst der Härter. Beispielsweise kann der Klebstoff oder die Klebstoffkomponente bei einer Temperatur von etwa 55 °C aktivierbar sein.

Besondere Vorteile ergeben sich, wenn die Beschichtung einen blockierten und/oder verkapselten Härter aufweist, d. h. einen Härter, der erst ab einer bestimmten Temperatur aktiv wird.

Insbesondere kann der Härter als Isozyanat oder Amin ausgebildet sein. Isozyanate sind dabei besonders geeignet bei der Verwendung mit Klebstoffen, die Polyurethan enthalten, während Amine besonders geeignet sind bei der Verwendung von Klebstoffen, die Epoxidharz umfassen.

Der Klebstoff kann Polyurethan, Polyether oder Epoxid umfassen. Diese Klebstoffe bzw. Klebstoffkomponenten sind besonders geeignet, ein Applikationsmaterial auf einem Träger zu fixieren.

Die Beschichtung kann Additive, insbesondere flammhemmende Substanzen, antimikrobielle Substanzen oder Adsorptionsmaterial, z. B. Aktivkohle, zur Geruchsbindung, umfassen. Dadurch kann der Beschichtung eine weitere Funktion gegeben werden.

Gemäß einer Ausführungsform kann die Beschichtung mehrere Schichten umfassen, wobei eine Schicht einen Härter und keinen Klebstoff und eine andere Schicht einen Klebstoff aufweist. Somit können der Härter und der Klebstoff in der Beschichtung getrennt gehalten werden.

Weiterhin ist es denkbar, dass die Beschichtung mehrere Schichten umfasst, wobei eine Schicht einen Klebstoff und keinen Härter aufweist. Denkbar ist es auch, dass eine Schicht ausschließlich Klebstoff und eine andere Schicht sowohl Klebstoff als auch Härter aufweist. Beispielsweise können so unterschiedliche Komponenten des Klebstoffs voneinander getrennt gehalten werden, bis es zu einer Aktivierung des Klebstoffs kommt. Insbesondere können Kleber, Härter und mikrowellenaktives Material in einer Schicht vorgesehen sein.

Die Beschichtung kann ein Trockenauftragsgewicht von maximal 400 g/m³, vorzugsweise von maximal 180 g/m³ aufweisen.

Das Applikationsmaterial ist als Textil, Leder, Kunstleder, Kunststoff, Abstandsgewirk, Abstandsgestrick oder Vlies ausgebildet.

In den Rahmen der Erfindung fällt außerdem ein Verfahren zum Aufbringen eines erfindungsgemäßen Applikationsmaterials auf einen Träger mit den Merkmalen des Anspruchs 8.

Zu diesem Zweck können Träger mit aufgelegtem Applikationsmaterial diskontinuierlich erwärmt werden oder in einer Batch-Maschine beispielsweise durch einen Tunnel geführt werden, in dem die Erwärmung mittels Mikrowellentechnik oder Induktionstechnik erfolgt. Insbesondere kann dadurch ganz gezielt Energie in den Fugenbereich zwischen Applikationsmaterial und Träger eingebracht werden, ohne dass es zu einer Langzeiterwärmung der gesamten Anordnung bestehend aus Träger und Applikationsmaterial kommt. Dadurch kann sowohl das Material des Trägers als auch und insbesondere das Material des Applikationsmaterials geschützt werden. Insbesondere ist das Applikationsmaterial mit Beschichtung lagerbar. Klebstoff muss nicht unmittelbar vor dem Fixieren des Applikationsmaterials auf dem Träger aufgebracht werden. Das Kaschieren des Trägers mit Applikationsmaterial kann nahezu "kalt" durchgeführt werden, jedenfalls ohne einen temperaturbedingten Verzug des Applikationsmaterials zu verursachen.

Das Applikationsmaterial wird unter lokaler Erwärmung auf dem Träger vorpositioniert, ehe die Erwärmung mittels Mikrowellentechnik oder Induktionserwärmung erfolgt. Beispielsweise kann der Träger erwärmt werden. Alternativ ist es denkbar, die Beschichtung, beispielsweise mit einer Heißluftpistole, zu erwärmen. Dadurch wird der Kleber leicht angeschmolzen, sodass das Applikationsmaterial leicht auf dem Träger positioniert und verschoben werden kann. Diese Erwärmung ist jedoch nicht ausreichend, um auch den Härter zu aktivieren.

Vorteilhafterweise wird das Applikationsmaterial vor dem Aufbringen auf den Träger vorkonfektioniert, insbesondere gestanzt, geschnitten oder wird ein Nähkleid erstellt. Auf diese Art und Weise kann das Applikationsmaterial an den Träger angepasst werden.

Besondere Vorteile ergeben sich, wenn die Beschichtung auf das Applikationsmaterial von Rolle zu Rolle aufgebracht wird. Dies bedeutet, dass das Applikationsmaterial von einer Rolle abgerollt wird, die Beschichtung z. B. aus einer Paste, aufgebracht wird und unmittelbar danach das Applikationsmaterial mit der Beschichtung aufgerollt wird und so transportiert werden kann. Alternativ ist es denkbar, dass das Applikationsmaterial zunächst vorkonfektioniert wird, beispielsweise indem es gestanzt, geschnitten oder ein Nähkleid erstellt wird und anschließend die Beschichtung auf das vorkonfektionierte Applikationsmaterial aufgebracht wird.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung, wie sie in den Ansprüchen definiert ist, verwirklicht sein.

In der schematischen Zeichnung sind Ausführungsbeispiele der Erfindung in verschiedenen Stadien der Benutzung dargestellt und in der nachfolgenden Beschreibung näher erläutert.

Es zeigen:
- Fig. 1: eine erste Ausführungsform eines Applikationsmaterials, die auf einem Träger angeordnet ist;
- Fig. 2: eine zweite Ausführungsform einer Applikation, die auf einem Träger angeordnet ist, wobei die Beschichtung des Applikationsmaterials zwei Schichten aufweist;
- Fig. 3: eine dritte Ausführungsform eines Applikationsmaterials, die auf einem Träger angeordnet ist;
- Fig. 4: eine vierte Ausführungsform eines Applikationsmaterials, die auf einem Träger angeordnet ist.

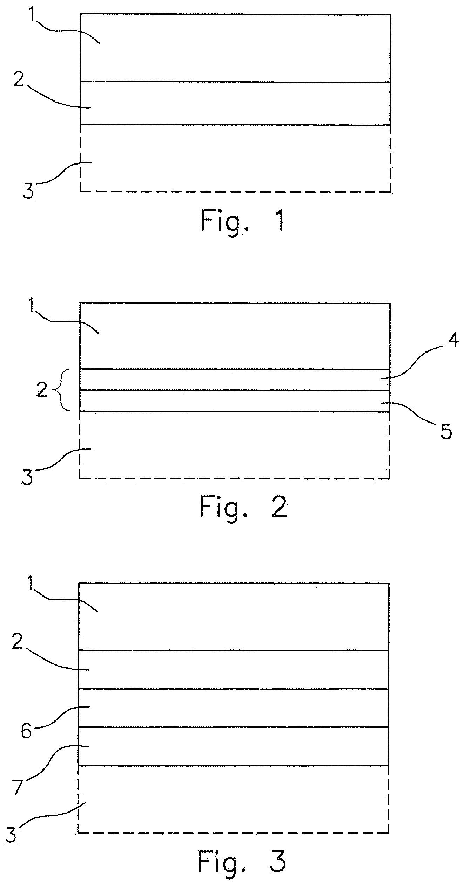

In Fig. 1 ist in stark schematisierter Darstellung ein Applikationsmaterial 1 gezeigt, welches beispielsweise aus Kunstleder, Textil, Leder, Abstandsgewirk, Vlies oder dergleichen ausgebildet sein kann. Das Applikationsmaterial 1 weist an seiner Unterseite eine Beschichtung 2 auf. Die Beschichtung 2 enthält ein mikrowellenaktivierbares und/oder induktionskoppelbares Material. Außerdem ist es denkbar, dass die Beschichtung 2 einen Klebstoff und einen Härter aufweist oder auch nur eines von beidem. Das Applikationsmaterial 1 ist auf dem Träger 3 angeordnet. Hier kann das Applikationsmaterial 1 mit dem Träger 3 verklebt werden, indem durch Mikrowellentechnik oder Induktionstechnik das mikrowellenaktivierbare Material oder das induktionskoppelbare Material in der Beschichtung 2 aktiviert wird, wodurch eine Erwärmung oder Beschichtung 2 erfolgt, sodass sowohl eine Klebstoffkomponente im Bereich zwischen dem Applikationsmaterial 1 und dem Träger 3 also auch ein Härter im Bereich zwischen dem Applikationsmaterial 1 und dem Träger 3 erwärmt und somit aktiviert wird.

Die Fig. 2 zeigt eine Ausführungsform, bei der die Beschichtung 2 an der Unterseite des Applikationsmaterials 1 zwei Schichten 4, 5 aufweist. Dabei kann vorgesehen sein, dass die Schicht 4 sowohl einen Klebstoff als auch einen Härter und die Schicht 5 lediglich einen Härter aufweist. Das mikrowellenaktivierbare oder induktionskoppelbare Material kann sowohl in der Schicht 4 als auch in der Schicht 5 angeordnet sein. Dabei kann vorgesehen sein, dass die Schichten 4, 5 unterschiedliche Klebstoffkomponenten aufweisen.

In der Fig. 3 ist ein Ausführungsbeispiel dargestellt, bei dem das Applikationsmaterial 1 eine Beschichtung 2 aufweist, welche mikrowellenaktivierbares und/oder induktionskoppelbares Material aufweist. Darunter kann eine weitere Schicht, beispielsweise ein Abstandsgewirk 6, angeordnet sein. Unterhalb des Abstandsgewirks 6, das auch als Träger bezeichnet werden kann, kann eine weitere Beschichtung 7 angeordnet sein, die einen Klebstoff, einen Härter und/oder ein mikrowellenaktivierbares oder induktionskoppelbares Material aufweisen kann. Es ist denkbar, dass lediglich die Beschichtung 2 das mikrowellenaktivierbare oder induktionskoppelbare Material aufweist. Dieses kann soweit erwärmt werden, dass eine Erwärmung der Beschichtung 7 durch das Abstandsgewirk 6 hindurch erfolgen kann, um dadurch einen Klebstoff und/oder Härter zu aktivieren und dadurch eine Verklebung mit dem Träger 3 herzustellen.

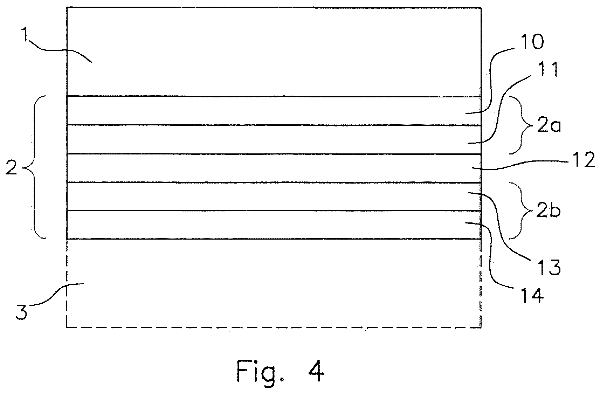

In der Fig. 4 ist ein weiteres Ausführungsbeispiel dargestellt, bei dem das Applikationsmaterial 1 eine Beschichtung 2 aufweist. Die Beschichtung 2 umfasst eine Schicht 10 mit einem mikrowellenaktivierbaren Material und eine Schicht 11 mit einem Klebstoff. Unterhalb der Schicht 11 ist eine weitere Schicht 12 mit einem Applikationsmaterial, beispielsweise einem Abstandsgewirk, vorgesehen. Daran schließt sich eine Schicht 13 an, die mikrowellenaktivierbares Material enthält. Unterhalb der Schicht 13 ist eine Schicht 14 vorgesehen, die einen Klebstoff enthält. Diese Schicht wiederum ist zur Anordnung auf dem Träger 3 vorgesehen. Die Schichten 10, 11 stellen eine Beschichtung 2a des Applikationsmaterials 1 dar. Da das Abstandsgewirk in der Schicht 12 ebenfalls als Applikationsmaterial betrachtet werden kann, können auch die Schichten 13, 14 als Bestandteil einer Beschichtung 2b des Applikationsmaterials 12 aufgefasst werden. Es bestehen somit unzählige Möglichkeiten der Kombination unterschiedlicher Schichten, die eine Beschichtung eines Applikationsmaterials darstellen, welches auf einem Träger angeordnet werden kann.

## Patentansprüche

1. Applikationsmaterial (1) zur Applikation auf einen Träger (3) mit einer Beschichtung (2), die ein mikrowellenaktivierbares und/oder induktionskoppelbares Material und einen Klebstoff oder eine Klebstoffkomponente umfasst, der oder die bei einer Temperatur kleiner 80 °C aktivierbar sind, aufweist, **dadurch gekennzeichnet, dass** die Beschichtung (2) als mikrowellenaktivierbares und/oder induktionskoppelbares Material elektrisch leitende Partikel, Ruß, Kohlenstoff, Graphit, Kohlenstoffnanoröhrchen (Carbon nanotubes), Ferrit, Lösungsmittel und/oder Wasser aufweist und dass die Beschichtung (2) einen bei einer Temperatur größer oder gleich 100 °C aktivierbaren Härter zur Härtung eines Klebestoffs aufweist, wobei das Applikationsmaterial (1) als Textil, Leder, Kunstleder, Kunststoff, Abstandsgewirk, Abstandsgestrick oder Vlies ausgebildet ist.

2. Applikationsmaterial nach Anspruch 1, **dadurch gekennzeichnet, dass** die Beschichtung (2) einen blockierten und/oder verkapselten Härter aufweist.

3. Applikationsmaterial nach Anspruch 1 oder 2, **dadurch gekennzeichnet, dass** der Härter als Isozyanat oder Amin ausgebildet ist.

4. Applikationsmaterial nach einem der vorhergehenden Ansprüche, **dadurch gekennzeichnet, dass** der Klebstoff Polyurethan oder Epoxid umfasst.

5. Applikationsmaterial nach einem der vorhergehenden Ansprüche, **dadurch gekennzeichnet, dass** die Beschichtung (2) Additive, z. B. flammhemmende Substanzen, umfasst.

6. Applikationsmaterial nach einem der vorhergehenden Ansprüche, **dadurch gekennzeichnet, dass** die Beschichtung (2) mehrere Schichten (4, 5) umfasst, wobei eine Schicht (5) einen Härter und keinen Klebstoff und eine andere Schicht (4) einen Klebstoff aufweist.

7. Applikationsmaterial nach einem der vorhergehenden Ansprüche, **dadurch gekennzeichnet, dass** die Beschichtung mehrere Schichten (4, 5) umfasst, wobei eine Schicht einen Klebstoff und keinen Härter aufweist.

8. Verfahren zum Aufbringen eines Applikationsmaterials (1) nach einem der vorhergehenden Ansprüche auf einen Träger (3), bei dem das Applikationsmaterial (1) mit der Beschichtung (2) auf den Träger (3) aufgelegt wird und die Beschichtung (2) erwärmt wird, indem das mikrowellenaktivierbare Material mittels Mikrowellentechnik oder das induktionskoppelbare Material mittels Induktionserwärmung erwärmt wird und das Applikationsmaterial (1) unter lokaler Erwärmung auf dem Träger (3) vorpositioniert wird, ehe die Erwärmung mittels Mikrowellentechnik oder Induktionserwärmung erfolgt.

9. Verfahren nach Anspruch 8, **dadurch gekennzeichnet, dass** das Applikationsmaterial (1) vor dem Aufbringen auf den Träger (3) vorkonfektioniert, insbesondere gestanzt, geschnitten oder ein Nähkleid erstellt wird.

10. Verfahren nach einem der vorhergehenden Ansprüche 8 oder 9, **dadurch gekennzeichnet, dass** die Beschichtung (2) auf das Applikationsmaterial (1) von Rolle zu Rolle aufgebracht wird oder das Applikationsmaterial (1) zunächst vorkonfektioniert wird und anschließend die Beschichtung (2) aufgebracht wird.

## Claims

1. Application material (1) for applying on a support (3) with a coating (2), which comprises a material that may be activated by microwaves and/or coupled by induction and an adhesive or an adhesive component, which may be activated at a temperature lower than 80° C, **characterised in that** the coating (2) has electrically conductive particles, soot, carbon, graphite, carbon nanotubes, ferrite, solvent and/or water as material that may be activated by microwaves and/or coupled by induction and that the coating (2) has a hardener that may be activated at a temperature higher than or equal to 100° C for hardening an adhesive, in which the application material (1) is made as textile, leather, artificial leather, plastic, spacer fabric, knitted spacer fabric or fleece.

2. Application material according to claim 1, **characterised in that** the coating (2) has a blocked and/or encapsulated hardener.

3. Application material according to claim 1 or 2, **characterised in that** the hardener is made as isocyanate or amine.

4. Application material according to one of the previous claims, **characterised in that** the adhesive comprises polyurethane or epoxy.

5. Application material according to one of the previous claims, **characterised in that** the coating (2) comprises additives, such as flame-retarding substances for example.

6. Application material according to one of the previous claims, **characterised in that** the coating (2) comprises several layers (4, 5), in which one layer (5) has a hardener and no adhesive and another layer (4) has an adhesive.

7. Application material according to one of the previous claims, **characterised in that** the coating comprises several layers (4, 5), in which one layer has an adhesive and no hardener.

8. Method for applying an application material (1) according to one of the previous claims on a support (3), in which the application material (1) is applied on the support (3) with the coating (2) and the coating (2) is heated, in which the material that may be activated by microwaves is heated by means of microwave technology or the material that may be coupled by induction is heated by means of induction heating and the application material (1) is pre-positioned on the support (3) using local heating, before heating by means of microwave technology or induction heating takes place.

9. Method according to claim 8, **characterised in that** the application material (1) is pre-assembled, particularly punched or cut, before applying to the support (3) or a sewn covering is created.

10. Method according to one of previous claims 8 or 9, **characterised in that** the coating (2) is applied to the application material (1) from roll to roll or first the application material (1) is pre-assembled and then the coating (2) is applied.

## Revendications

1. Matériau d'application (1) pour l'application sur un support (3) avec un revêtement (2), qui comprend un matériau pouvant être activé par micro-ondes et/ou un matériau pouvant être couplé par induction et un adhésif ou un composant adhésif, qui peut ou peuvent être activés à une température inférieure à 80 °C, **caractérisé en ce que** le revêtement (2) présente comme matériau pouvant être activé par micro-ondes et/ou comme matériau pouvant être couplé par induction, des particules électro-conductrices, de la suie, du carbone, du graphite, des nanotubes de carbone (carbon nanotubes), du ferrite, des solvants et/ou de l'eau, et que le revêtement (2) présente un durcisseur pouvant être activé à une température supérieure ou égale à 100 °C pour le durcissement d'un adhésif, dans lequel le matériau d'application (1) est conçu comme un textile, du cuir, du similicuir, une matière plastique, un tissu à maille d'espacement, un tricot d'espacement ou un feutre.

2. Matériau d'application selon la revendication 1, **caractérisé en ce que** le revêtement (2) présente un durcisseur bloqué et/ou encapsulé.

3. Matériau d'application selon la revendication 1 ou 2, **caractérisé en ce que** le durcisseur est conçu comme un isocyanate ou une amine.

4. Matériau d'application selon l'une des revendications précédentes, **caractérisé en ce que** l'adhésif comprend du polyuréthane ou de l'époxyde.

5. Matériau d'application selon l'une des revendications précédentes, **caractérisé en ce que** le revêtement (2) comprend des additifs, par exemple des substances ignifuges.

6. Matériau d'application selon l'une des revendications précédentes, **caractérisé en ce que** le revêtement (2) comprend plusieurs couches (4, 5), dans lequel une couche (5) présente un durcisseur et pas d'adhésif et une autre couche (4), un adhésif.

7. Matériau d'application selon l'une des revendications précédentes, **caractérisé en ce que** le revêtement comprend plusieurs couches (4, 5), dans lequel une couche présente un adhésif et pas de durcisseur.

8. Procédé de dépôt d'un matériau d'application (1) selon l'une des revendications précédentes sur un support (3), dans lequel le matériau d'application (1) est placé avec le revêtement (2) sur le support (3) et le revêtement (2) est chauffé, en chauffant le matériau pouvant être activé par micro-ondes au moyen d'une technique à micro-ondes ou le matériau pouvant être couplé par induction au moyen d'un chauffage par induction et le matériau d'application (1) est prépositionné en chauffant localement, sur le support (3), avant que le chauffage s'effectue au moyen d'une technique à micro-ondes ou un chauffage par induction.

9. Procédé selon la revendication 8, **caractérisé en ce qu'**avant le dépôt sur le support (3), le matériau d'application (1) est pré-confectionné, en particulier estampé, découpé ou un revêtement cousu est produit.

10. Procédé selon l'une des revendications 8 ou 9, **caractérisé en ce que** le revêtement (2) est déposé sur le matériau d'application (1) de rouleau à rouleau ou le matériau d'application (1) est tout d'abord pré-confectionné et ensuite le revêtement est déposé.
